# EUROPEAN PATENT APPLICATION

(11) **EP 1 681 632 A2**
(43) Date of publication of application: **19.07.2006**
(21) Application number: 05252413.9
(22) Date of filing: 18.04.2005
(51) Int. Cl.: G06F 13/40

(54) **Method and apparatus for monitoring a number of lanes between a controller and a PCI express device**

(30) Priority: 18.01.2005 JP 2005010821
(71) Applicant: FUJITSU LIMITED, Kawasaki-shi, Kanagawa 211-8588 (JP)
(72) Inventor: Sue, Satoshi, c/o Fujitsu Limited, Kawasaki-shi Kanagawa 211-8588 (JP)
(74) Representative: Fenlon, Christine Lesley

(57) **Abstract**

After an initialization of an information processing apparatus (10), an MMB (400) reads out a value in a Negotiated Link Width register (211c) and stores the value in a RAM (420). When receiving an interrupt from the I/O bridge (210), the MMB reads out a value in the Negotiated Link Width register again and compares the value with the value stored in the RAM. When both the values are different, the MMB transmits a message to a console and takes predetermined measures, such as separation of the device.

## Description

The present invention relates to a method and apparatus for monitoring the number of lanes between a controller and a PCI Express device.

In accordance with a rapid increase in processing speed of a processor, various interfaces for the processor are also required to operate at higher speed. For example, the Peripheral Component Interconnect (PCI), which has been used for connecting a processor and various devices in a personal computer, has a transfer rate of about 133 MB/second. However, the performance of the processor is not fully utilized at this transfer rate. Thus, PCI is gradually replaced by a new interface called PCI Express that can achieve a higher transfer rate.

PCI Express adopts a serial interface instead of the conventional parallel interface. The serial interface can increase processing speed because, unlike the parallel interface, the serial interface is not required to synchronize signals and is less likely to be affected by noise. PCI Express has a transfer rate of about 500 MB/second. In addition, PCI Express can achieve a higher transfer rate by using a plurality of serial interfaces.

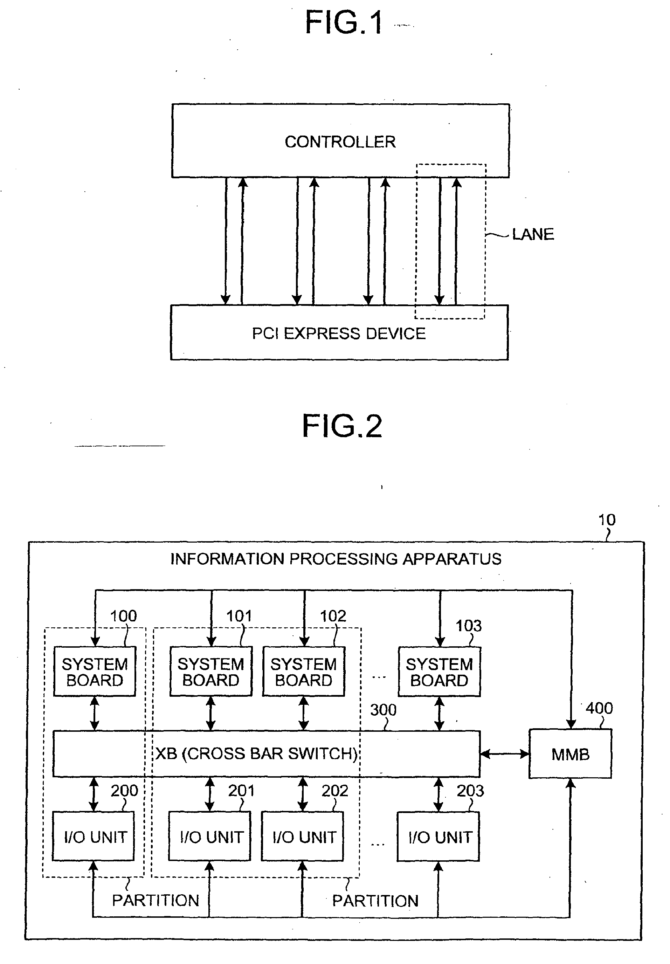

Fig. 1 is a diagram of a controller and a device connected by PCI Express. A pair of interfaces between the two is called a lane. The controller and the PCI Express device are connected by one or more lanes.

The specification of PCI Express is described in detail in "PCI Express Base Specification 1.0a", PCI-SIG (URL: http://www.pcisig.com/specifications/pciexpress/base/). PCI Express secures software compatibility with the conventional PCI. That is, a driver and an Operating System (OS), which are used in the conventional PCI, can be also used in PCI Express as they are unless a function peculiar to PCI Express is required.

However, the conventional PCI does not adopt the idea of using plural lanes for connecting the controller and the devices. As a result, the conventional driver and the conventional OS disadvantageously operate as they are even when the PCI Express device, which should be connected to the controller by two lanes, is connected by only one lane. In other words, the driver and the OS cannot detect the decrease in the number of lanes which actually operate. As result, in some cases, the PCI Express device does not operate as expected. For example, a storage device cannot achieve high speed which is required for the device. Furthermore, significant fault can be caused by a chain of failures if the system continues to operate without detecting failure in a part of the system.

It is desirable to at least solve the problems in the conventional technology.

An information processing apparatus according to one embodiment of an aspect of the present invention comprises a controller that is connected to a PCI Express device by a link; a managing unit that determines whether a first number of lanes that are included in the link when receiving an interrupt from the controller is equal to a second number of lanes that were included in the link at the time of initialization of the information processing apparatus, and that performs a predetermined processing when the first number is equal to the second number.

An information processing apparatus according to one embodiment of another aspect of the present invention comprises a controller that is connected to a device by a set of a plurality of serial lines; a managing unit that determines whether a first number of the serial lines that are included in the set when receiving an interrupt from the controller is equal to a second number of the serial lines that were included in the set at the time of initialization of the information processing apparatus, and that performs a predetermined processing when the first number is equal to the second number.

A method according to one embodiment of still another aspect of the present invention is a method for monitoring connection status between a controller and a device that are connected to each other by a set of a plurality of serial lines. The method comprises determining whether a first number of the serial lines that are included in the set when receiving an interrupt from the controller is equal to a second number of the serial lines that were included in the set at the time of initialization; and performing a predetermined processing when the first number is equal to the second number.

The other objects, features, and advantages of the present invention are specifically set forth in or will become apparent from the following detailed description of the invention by way of example when read in conjunction with the accompanying drawings, in which:
Fig. 1 is a diagram of a controller and a device connected by PCI Express;
Fig. 2 is a block diagram of a structure of an information processing apparatus according to an embodiment of the present invention;
Fig. 3 is a block diagram of a structure of an I/O unit shown in Fig. 2;
Fig. 4 is a block diagram of a structure of a control register shown in Fig. 3;
Fig. 5 is a block diagram of a structure of an MMB shown in Fig. 2;
Fig. 6 is a block diagram of a structure of firmware executed by the MMB according to an embodiment of the invention; and
Figs. 7 and 8 are a flowchart of a processing procedure of the information processing apparatus according to an embodiment of the invention.

Exemplary embodiments of the present invention are explained in detail below with reference to the accompanying drawings.

Fig. 2 is a block diagram of an information processing apparatus according to an embodiment of the present invention. An information processing apparatus 10 includes system boards 100 to 103 with processors and memories, I/O units 200 to 203 for connecting various PCI Express devices to the information processing apparatus 10, and a cross bar switch (XB) 300 for connecting the system boards 100 to 103 and the I/O units 200 to 203. The number of system boards and I/O units connected to the cross bar switch 300 is not limited to 4 as shown in Fig. 2.

A Management Board (MMB) 400 is connected to the system boards 100 to 103, the I/O units 200 to 203, and the cross bar switch 300, respectively. The MMB 400 performs various kinds of management processing for the information processing apparatus 10, such as monitoring connection status of the system boards 100 to 103 and the I/O units 200 to 203.

A combination of a system board (or system boards) and an I/O unit (or I/O units) connected by the cross bar switch 300 is called "partition". In Fig. 2, one partition is formed by the system board 100 and the I/O unit 200, and another partition is formed by the system boards 101 and 102 and the I/O units 201 and 202. Each partition operates independently, and can be controlled by different operating systems.

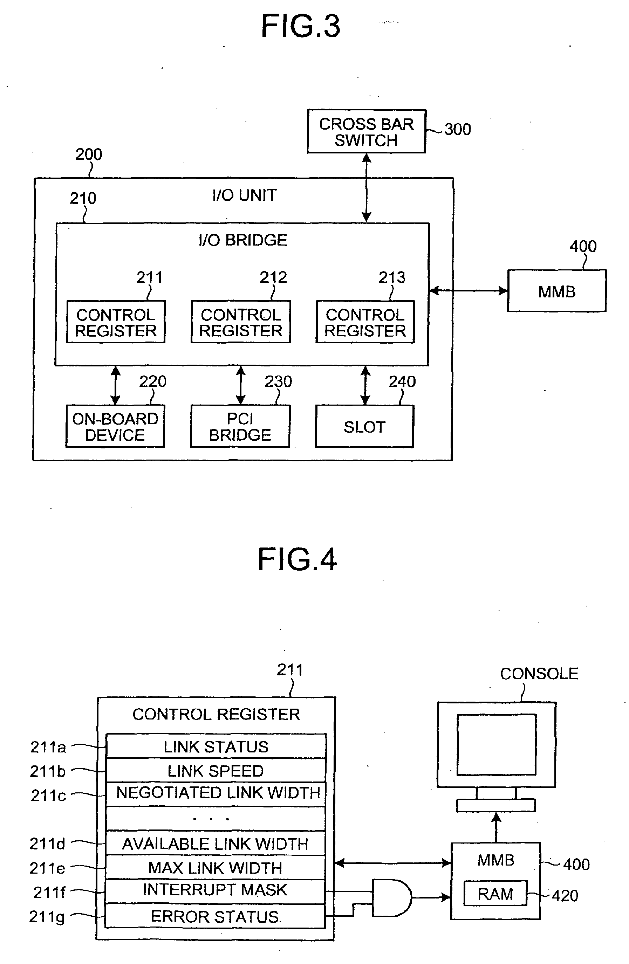

The I/O units 200 to 203 have the same structure. Fig. 3 is a block diagram of a structure of the I/O unit 200 shown in Fig. 2. The I/O unit 200 includes an I/O bridge 210 for connecting various PCI Express devices to the cross bar switch 300 by converting a signal transmitted therebetween. The I/O bridge 210 is connected to the MMB 400 which monitors connection status between the I/O bridge 210 and the cross bar switch 300. The I/O bridge 210 is also connected to an on-board device 220 provided on the I/O unit 200 (such as a network interface), a PCI bridge 230 for connecting the conventional PCI device, and a slot 240 for connecting a PCI Express device in a form of an extension board.

The I/O bridge 210 corresponds to the controller shown in Fig. 1. The on-board device 220, the PCI bridge 230, and the slot 240 are respectively connected to the I/O bridge 210 by PCI Express. Each connection is called "port (link)", which includes one or more lanes.

The I/O bridge 210 includes a plurality of control registers 211 to 213, each of which corresponds to each of the PCI Express devices. The control registers 211 to 213 have the same structure. Fig. 4 is a block diagram of a structure of the control register 211 shown in Fig. 3. The control register 211 includes a plurality of control registers 211 a to 211 g that can be read or written by the MMB 400. The control registers 211a to 211 g are divided into two types.

A Link Status register 211 a, a Link Speed register 211 b, and a Negotiated Link Width register 211 c are a part of the registers used for connecting the devices by PCI Express. The Link Status register 211a holds connection status of the devices. The Link Speed register 211 b holds a transfer rate between the I/O bridge 210 and the devices. The Negotiated Link Width register 211 c holds the number of lanes for connecting the devices.

After the initialization of the information processing apparatus 10, the MMB 400 reads out a value in the Negotiated Link Width register 211 c and stores the value in a RAM 420. When receiving an interrupt from the I/O bridge 210, the MMB 400 reads out a value in the Negotiated Link Width register 211 c again and compares the value with the value stored in the RAM 420. When both the values are different, the MMB 400 transmits a message (message for notifying decrease in the number of lanes) to a console and takes predetermined measures, such as separation of the device.

In other words, even if the driver and the OS are not compatible with PCI Express, the information processing apparatus 10 can detect the decrease in the number of lanes and take proper measures against the decrease. In addition, the above function is preferably realized simply by adding a small module to the MMB 400 which has various control management functions.

On the other hand, an Available Link Width register 211d, a Max Link Width register 211e, an interrupt Mask register 211f, and an Error Status register 211g are used for monitoring decrease in the number of lanes. The Available Link Width register 211 d holds the number of lanes that the devices can use in terms of their specification. The Max Link Width register 211e holds the number of lanes that are physically connectable to the I/O unit 200.

After the initialization of the information processing apparatus 10, the MMB 400 compares smaller one of values in the Available Link Width register 211d and the Max Link Width register 211e and a value in the Negotiated Link Width register 211 c. When the values are not identical, the MMB 400 transmits a message to the console and takes predetermined measures, such as stopping start of the system.

In other words, the MMB 400 checks whether the devices are connected using the original number of lanes, which is stored in the Available Link Width register 211 d or the Max Link Width register 211 e, when the system is initialized. Consequently, even if the driver and the OS are not compatible with PCI Express, it is possible to prevent the system from starting and operating with the number of lanes being decreased. Values in the Available Link Width register 211 d and the Max Link Width register 211e can be set manually by an administrator or be set automatically by the MMB 400.

The interrupt Mask register 211f holds a mask value for determining whether to generate an interrupt to the MMB 400 when an error is detected in a port. The Error Status register 211 g holds a bit corresponding to the type of the error. If the logical AND of the values in the interrupt Mask register 211f and the Error Status register 211g is non-zero, an interrupt is generated to the MMB 400.

Upon detecting the interrupt, the MMB 400 compares the value of the Negotiated Link Width register 211 c and the value stored in the RAM 420. When the values are different (that is, the number of lanes has decreased), the MMB 400 takes a predetermined measures, for example, separates the device connected by the port in which the error is detected.

The system continues to operate even if the device is separated due to the decrease, unless the device is essential for operation of the system. The system can be restored to an original state by connecting a normal device to a normal port, setting the MMB 400, and adding an I/O unit including the port to a partition. Reconfiguration of a system, which is performed while the operation of the system is continued, is called "dynamic reconfiguration". When the dynamic reconfiguration is executed, in the same manner as the system startup, the control register is initialized and the MMB 400 checks whether the number of lanes has decreased.

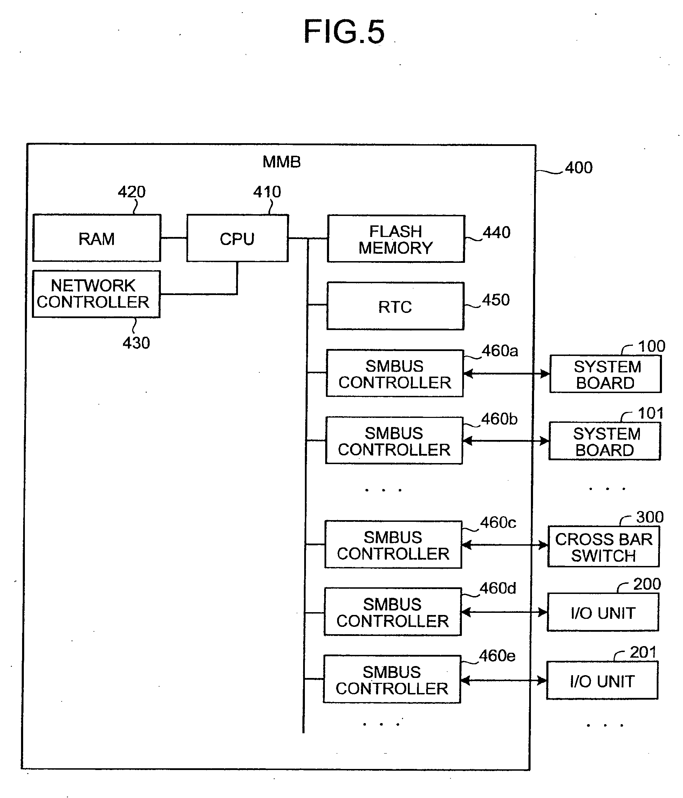

Fig. 5 is a block diagram of a structure of the MMB 400 shown in Fig. 2. The MMB 400 includes a CPU 410, the RAM 420, a network controller 430, a flash memory 440, a real time clock (RTC) 450, and SMBUS controllers 460a to 460e that are connected to each other.

The CPU 410 executes firmware (a computer program) stored in the flash memory 440. The RAM 420 temporarily stores data used by the CPU 410. The network controller 430 is a network interface for exchanging various kinds of information with the console via a network.

The flash memory 440 permanently stores the firmware executed by the CPU 410 and various settings. The real time clock 450 measures time required for various kinds of control. The SMBUS controllers 460a to 460e are interface devices for exchanging signals with the system boards 100 to 103, the I/O units 200 to 203, and the cross bar switch 300 that are controlled by the MMB 400.

The MMB 400 executes the firmware stored in the flash memory 440 and executes the various kinds of processing while reading/writing data from/in the RAM 420 as required. The MMB 400 exchanges signals with the system boards 100 to 103, the I/O units 200 to 203, and the cross bar switch 300 via the SMBUS controllers 460a to 460e to control connection status of these devices.

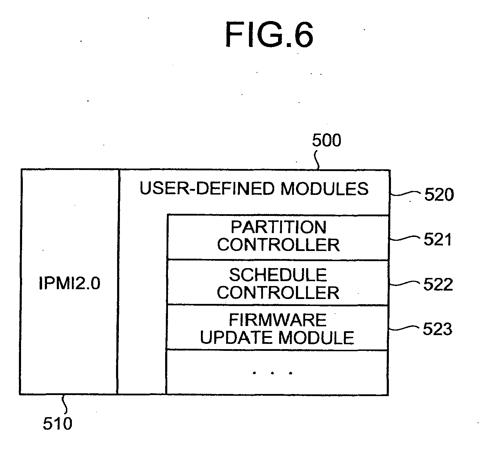

Fig. 6 is a block diagram of a structure of the firmware executed by the MMB 400. Firmware 500 includes an Intelligent Platform Management Initiative (IPMI) 510 and user-defined modules 520. The IPMI 510 is a standard firmware for managing an information processing apparatus such as a server. The user-defined modules 520 are firmware added by each vender of the information processing apparatus to supplement and expand a function of the IPMI 510.

The user-defined modules 520 include a plurality of modules such as a partition controller 521, a schedule controller 522, and a firmware update module 523. The partition controller 521 is a module for connecting a system board and an I/O unit via the cross bar switch 300 to form a partition. The partition controller 521 also monitors decrease in the number of lanes and takes measures when the decrease is detected. The schedule controller 522 is a module for automatically starting various kinds of processing according to a schedule set in advance. The firmware update module 523 is a module for updating the firmware.

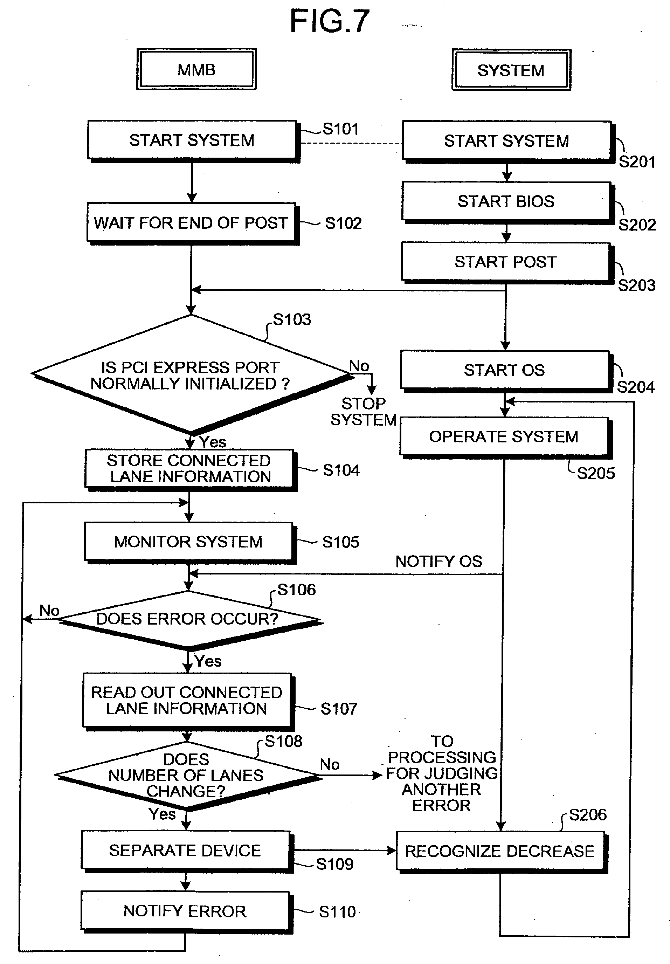

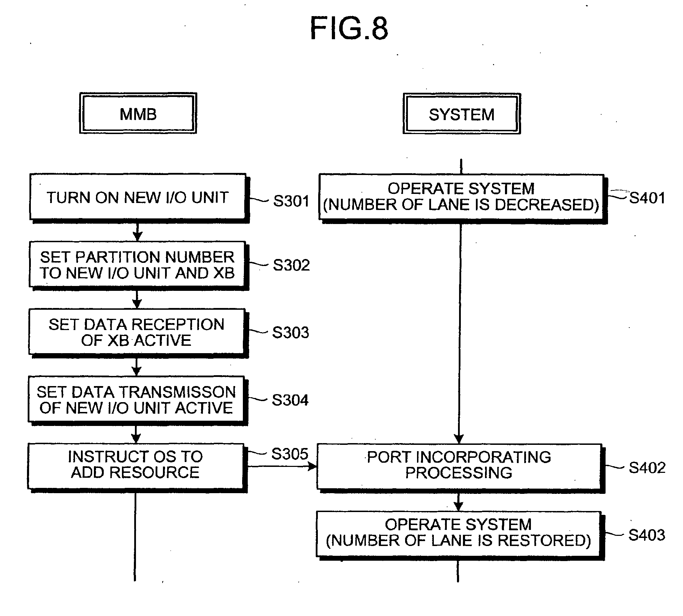

Figs. 7 and 8 are flowcharts of processing procedures of the information processing apparatus 10 shown in Fig. 2. As shown in Fig. 7, when the system is started (step S201), Basic Input/Output System is started (step S202) and Power On Self Test (POST) is executed by a diagnosis program (step S203). After the POST is completed normally, the OS is started (step S204) and the system comes into a normal operation state (step S205).

After the system is started (step S101), the MMB 400 stands by for completion of the POST (step S102). When a result of the POST is notified from the system, the MMB 400 checks whether PCI Express port is normally initialized. If the MMB 400 finds a port for which the initialization is not completed normally and the number of lanes are decreased ("No" at step S103), the MMB 400 transmits a message to the console and, then, stops the system.

If the initialization of the PCI Express port is completed normally ("Yes" at step S103), the MMB 400 reads out connected lane information of the respective ports from the Negotiated Link Width register 211c and stores the connected lane information in the RAM 420 the MMB 400 (step S104) and comes into a system monitoring state (step S105).

When the MMB 400 in the system monitoring state receives a notice that failure has occurred from the hardware such as the I/O unit or the software such as the OS ("Yes" at step S106), the MMB 400 reads out the connected lane information of the respective ports from the Negotiated Link Width register 211 c and compares it with the number of lanes stored in the RAM 420 (step S107). When the MMB 400 finds a change in the number of lanes in any one of the ports ("Yes" at step S108), the MMB 400 separates the port and notifies the system that the port is separated (step S109). The MMB 400 transmits error information to the console (step S110) and, then, returns to the system monitoring state.

The system receives the notice and recognizes the separation of the port to perform necessary processing (step S206). The system continues the operation state.

Fig. 8 is a flowchart of an operation performed by the information processing apparatus 10 when the system is restored by the dynamic reconfiguration. The system is operating while the number of lanes being decreased (step S401). The administrator installs an alternative I/O unit and, from the console, instructs the MMB 400 to incorporate a port, whereby the dynamic reconfiguration is executed.

The MMB 400 receives the instruction from the administrator, turns on a new I/O unit, and performs initial processing that is the same as the processing at the time of system startup (step S301). The MMB 400 sets a partition number for the new I/O unit and the cross bar switch 300 (step S302). Then, the MMB 400 performs setting for the cross bar switch 300 to activate data reception from the new I/O unit (step S303) and performs setting for the new I/O unit to activate data transmission to the cross bar switch 300 (step S304).

Subsequently, the MMB 400 notifies the OS that the new I/O unit is incorporated (step S305). The OS receives the notice and performs port incorporating processing to bring the new I/O unit into an operation state (step S402). Thus, the system operates in a state in which the port is restored (step S403).

As described above, when the number of lanes has decreased, the information processing apparatus 10 can cope with the decrease appropriately by the MMB 400 even if the driver and the OS are not compatible with PCI Express.

According to embodiments of the invention, the number of lanes is monitored and, when the number decreases, proper measures are taken by hardware even when a driver and an OS are not compatible with PCI Express.

Moreover, the number of lanes, to which the devices connected to the PCI Express interface should originally be connected, is stored and, when the system is started, it is checked whether the devices are connected using the number of lanes as stored. Thus, it is possible to prevent the system from being started with the number of lanes being decreased.

Furthermore, the controller of the PCI Express interface notifies the system management device of failure. Thus, the system management device can detect failure of the PCI Express interface such as decrease in the number of lanes even when the driver and the OS do not notify the system management device of the failure.

Moreover, the system can operate continuously even when the number of lanes decreases. Thus, it is possible to perform operation and maintenance of the system flexibly.

Furthermore, the alternative controller for the controller with the decreased number of lanes can be incorporated in a state in which the system operates continuously. Thus, it is possible to perform operation and maintenance of the system flexibly.

Moreover, the number of lanes, to which the devices connected to the PCI Express interface should originally be connected, is stored and, when the alternative controller is incorporated, it is checked whether the devices are connected using the number of lanes as stored. Thus, it is possible to prevent the system from operating with the number of lanes being decreased.

Although the invention has been described with respect to specific embodiments for a complete and clear disclosure, the appended claims are not to be thus limited but are to be construed as embodying all modifications and alternative constructions that may occur to one skilled in the art which fairly fall within the basic teaching herein set forth.

## Claims

1. An information processing apparatus comprising:
a controller that is connected to a PCI Express device by a link;
a managing unit that determines whether a first number of lanes that are included in the link when receiving an interrupt from the controller is equal to a second number of lanes that were included in the link at the time of initialization of the information processing apparatus, and that performs a predetermined processing when the first number is equal to the second number.

2. The information processing apparatus according to claim 1, wherein at the time of the initialization, the managing unit determines whether the first number is equal to a predetermined number of the lanes that are supposed to be included in the link.

3. The information processing apparatus according to claim 1, wherein the controller generates the interrupt when a failure occurs in the PCI Express device.

4. The information processing apparatus according to claim 1, further comprising a switch that is electrically connectable to and disconnectable from the controller, wherein
the managing unit disconnects the switch from the controller that is connected to the PCI Express device by the link in which the first number is determined not to be equal to the second number.

5. The information processing apparatus according to claim 4, wherein upon being notified that an alternative controller for the controller from which the switch is disconnected is mounted, the managing unit connects the switch to the alternative controller to perform dynamic configuration.

6. The information processing apparatus according to claim 5, wherein the managing unit determines whether the first number of lanes that are included in the link by which the alternative controller is connected to the PCI Express device is equal to a predetermined number of the lanes that are supposed to be included in the link.

7. An information processing apparatus comprising:
a controller that is connected to a device by a set of a plurality of serial lines;
a managing unit that determines whether a first number of the serial lines that are included in the set when receiving an interrupt from the controller is equal to a second number of the serial lines that were included in the set at the time of initialization of the information processing apparatus, and that performs a predetermined processing when the first number is equal to the second number.

8. A method for monitoring connection status between a controller and a device that are connected to each other by a set of a plurality of serial lines, comprising:
determining whether a first number of the serial lines that are included in the set when receiving an interrupt from the controller is equal to a second number of the serial lines that were included in the set at the time of initialization; and
performing a predetermined processing when the first number is equal to the second number.
